Europäisches Patentamt

European Patent Office

Office européen des brevets

(19)

(11) **EP 0 561 674 B1**

(12) **FASCICULE DE BREVET EUROPEEN**

(45) Date de publication et mention
de la délivrance du brevet:
**01.10.1997 Bulletin 1997/40**

(51) Int Cl.6: **H04N 5/217**

(21) Numéro de dépôt: **93400634.7**

(22) Date de dépôt: **12.03.1993**

(54) **Procédé de correction des défauts d'uniformité des pixels d'un senseur à l'état solide, et dispositif pour la mise en oeuvre du procédé**

Verfahren zur Korrektur von Pixelnichtuniformitäten eines Festkörpersensors und Vorrichtung dafür

Pixel non uniformity correction method for a solid-state sensor and device thereof

(84) Etats contractants désignés:
**DE FR GB**

(30) Priorité: **17.03.1992 FR 9203154**

(43) Date de publication de la demande:
**22.09.1993 Bulletin 1993/38**

(73) Titulaire: **THOMSON BROADCAST**
**95800 Cergy-Saint-Christophe (FR)**

(72) Inventeurs:
• **Botte, Bruno**
**F-92402 Courbevoie Cedex (FR)**

• **Lacoste, Jean-Pierre**
**F-92402 Courbevoie Cedex (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
**EP-A- 0 342 760**      **EP-A- 0 440 563**
**GB-A- 2 155 730**      **GB-A- 2 181 018**

## Description

La présente invention concerne un procédé de correction des défauts d'uniformité des pixels ou points-images d'un senseur à l'état solide ainsi qu'un dispositif pour la mise en oeuvre de ce procédé.

Les senseurs à l'état solide, notamment les senseurs de type CCD (pour "Charge Coupled Device" en langue anglaise), sont de plus en plus utilisés comme capteurs dans les équipements de prises de vues aussi bien pour les reportages que pour le studio. En effet, les senseurs à l'état solide, actuellement sur le marché, sont des dispositifs fiables, permettant d'obtenir une image de très bonne qualité. Toutefois, les éléments photo-sensibles de la matrice constituant le senseur présentent encore deux types de défauts :

L'un des défauts est constitué par une non-uniformité de sensibilité liée à une disparité de surfaces des éléments photo-sensibles. En fait, ce défaut est, en pratique, bien maitrisé par les constructeurs. Il est donc peu gênant lors de l'utilisation des senseurs dans des équipements de prises de vues.

L'autre défaut est constitué par une non-uniformité de courant d'obscurité. Ainsi, dans un senseur à l'état solide, quelques éléments photosensibles de la matrice peuvent présenter un courant d'obscurité anormalement élevé, ce qui se traduit sur une image par l'apparition de points colorés au noir. D'autre part, l'amplitude du courant d'obscurité est fonction de la température et peut être donnée par la formule :

$$I_d = Ke^{-E/kT}$$

Dans ce cas, le courant d'obscurité double approximativement tous les 8°C. Ce défaut est important dans une caméra de prises de vues, notamment à faible niveau vidéo, lorsque le contraste est augmenté par la correction de gamma. Pour remédier à cet inconvénient, on impose aux fournisseurs un tri sévère des senseurs à l'état solide, de manière à n'obtenir que des senseurs CCD dit "zéro défaut", c'est-à-dire des senseurs dans lesquels il n'y a aucun pixel totalement défectueux mais qui peuvent présenter quelques différences d'uniformité entre pixels.

Il existe, en plus du tri des senseurs à l'état solide, différentes solutions au problème de la non-uniformité en courant d'obscurité.

Comme le courant est fonction de la température, on a proposé de maintenir la température des senseurs dans une zone où l'amplitude des défauts reste acceptable. Pour ce faire, on réalise un refroidissement par effet PELTIER. Toutefois, l'effet PELTIER met en oeuvre un élément actif dont le rendement est faible de l'ordre de 10%, ce qui augmente la consommation électrique de l'équipement. D'autre part, des problèmes de condensation limitent l'efficacité du système.

On a donc proposé de réaliser le refroidissement des senseurs en utilisant un caloduc, à savoir un drain thermique dont la conductibilité thermique est mille fois supérieure à celle du cuivre. Toutefois, dans ce cas, l'abaissement de température obtenu qui est d'environ 15°C, est limité par la température de la face avant de la caméra qui joue le rôle de source froide du drain thermique.

Une autre solution, utilisée le plus souvent dans les caméras de type Grand Public, consiste à remplacer le pixel défectueux par le pixel précédent en bloquant une impulsion d'échantillonage. Cette solution est rendue nécessaire dans les caméras grand public par la présence de pixels aveugles. Les CCD utilisés dans les équipements "broadcast" ne présentent pas de tels défauts. D'autre part les effets de cette correction restent visibles sur des images présentant des détails fins. Cette correction n'est donc pas souhaitable dans une caméra pour le reportage et le studio dite "Broadcast".

EP-A-0 440 563 propose encore une autre solution, qui est caractérisée par les étapes suivantes :

- dans une première phase dite d'acquisition, on balaye ligne à ligne le senseur, et, pour chaque pixel d'une ligne, on détermine s'il y a lieu d'apporter une correction ou non par des opérations de calcul et de seuillage du signal vidéo.

Dans les noirs, on ferme l'iris et le signal vidéo est représentatif du courant d'obscurité des photosites.

Après les phase d'acquisition, on dispose d'une table de pixels défectueux avec les valeurs des corrections à appliquer.

Dans une seconde phase dite phase de restitution, on balaye ligne par ligne le senseur, pour chaque pixel de même position dans la table des pixels marqué défectueux, on applique au signal vidéo la valeur de correction stockée pour ledit pixel défectueux.

La présente invention a pour but de remédier notamment aux inconvénients mentionnés ci-dessus en proposant un nouveau procédé de correction des défauts d'uniformité des pixels d'un senseur à l'état solide mettant en oeuvre uniquement des moyens électroniques.

La présente invention a donc pour objet un procédé de correction des défauts d'uniformité des pixels d'un senseur à l'état solide. La correction dans les noirs est réalisée par soustraction d'offset.

Selon l'invention nous présentons un mode de réalisation particulier de correction dans les noirs où le défaut est le plus important, qui vise à améliorer le procédé ci-dessus.

Pour éviter de prendre en compte le bruit du signal vidéo, dans la phase d'acquisition, avant de comparer le signal vidéo à un seuil, on réalise une accumulation de la même ligne de signal sur K trames.

Selon un mode de réalisation particulier, pour réaliser la comparaison, le signal vidéo est numérisé et échantillonné à la fréquence d'horloge-pixel.

D'autre part, selon une autre caractéristique de la présente invention, et pour éviter les perturbations provoquées par les tâches au noir, la comparaison n'est pas réalisée en utilisant le signal numérisé correspondant au pixel lui-même, mais elle est réalisée, de préférence, en utilisant la fonction :

$$2 \, p(n) - p(n+2) - p(n - 2) > seuil$$

où p(n) correspond au signal vidéo numérisé du pixel de position n sur 1 ligne,
p(n + 2) correspond au signal vidéo numérisé du pixel de position n+2, et
p(n - 2) correspond au signal vidéo numérisé du pixel de position n - 2.

Selon une autre caractéristique de la présente invention, pour tenir compte de la variation du courant d'obscurité en fonction de la température, l'amplitude de la valeur de correction est ajustée en fonction de cette température.

La présente invention a aussi pour objet un dispositif pour la mise en oeuvre du procédé décrit ci-dessus, caractérisé en ce qu'il comporte un convertisseur numérique-analogique dont la sortie est connectée à une mémoire d'acquisition, permettant de stocker le signal vidéo numérisé, une mémoire d'adresse stockant au moins la position des pixels défectueux, au moins une mémoire de correction stockant l'amplitude des valeurs de correction, un microprocesseur effectuant l'accumulation et la comparaison au seuil et pilotant un séquenceur adressant les différentes mémoires et au moins un convertisseur numérique-analogique connecté en sortie de la mémoire de correction.

Selon un mode de réalisation préférentiel, la mémoire d'acquisition a une capacité correspondant à une ligne du senseur.et la mémoire d'adresse a une capacité correspondant au nombre de pixels du senseur, chaque bit de la mémoire d'adresse correspondant à un pixel du senseur et étant positionné à "0" ou à "1" suivant que le pixel est défectueux ou non. Le dispositif comporte, de préférence, trois mémoires de correction, chaque mémoire étant affectée respectivement aux composantes R, V et B. Pour limiter la capacité des mémoires de correction, chacune d'entre elles ne stocke que la valeur de correction associée à un pixel défectueux. D'autre part, le séquenceur est, de préférence, constitué par un réseau programmable.

Selon une autre caractéristique de la présente invention, la tension de référence des convertisseurs numériques-analogiques en sortie est fonction de la température.

Selon encore une autre caractéristique de la présente invention, le dispositif décrit ci-dessus est placé dans une caméra de prise de vue après l'échantillonneur et l'étage de gain et avant le circuit de traitement du signal vidéo.

D'autres caractéristiques et avantages de la présente invention apparaîtront à la lecture de la description d'un mode de réalisation préférentiel, faite ci-après avec référence aux dessins ci-annexés dans lesquels :

- la figure 1 est un schéma synoptique simplifié de la tête d'une caméra de prises de vues comportant un dispositif de correction des défauts d'uniformité des pixels d'un senseur à l'état solide conforme à la présente invention ;
- la figure 2 est un schéma synoptique du circuit de correction des défauts d'uniformités des pixels conforme à la présente invention, et
- la figure 3 est un schéma synoptique simplifié du séquenceur utilisé dans le dispositif représenté à la figure 2.

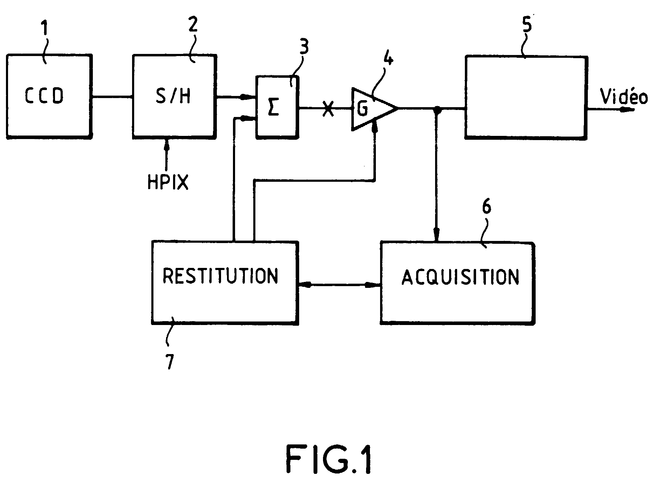

Comme représenté sur la figure 1, une tête de caméra de prises de vues est constituée essentiellement par un senseur 1 à l'état solide, plus particulièrement par une matrice CCD pour Charge Coupled Device en langue anglaise, cette matrice 1 est connectée en entrée d'un échantillonneur 2 qui échantillonne le signal vidéo à la fréquence d'horloge pixel HPIX. La sortie de l'échantillonneur est envoyée par l'intermédiaire d'un circuit sommateur 3 sur un étage de gain 4 dont la sortie est envoyée en entrée d'un circuit 5 de traitement du signal vidéo, plus particulièrement de traitement de gamma , de masking et de contours. Conformément à la présente invention, le circuit de correction est constitué d'un circuit d'acquisition 6 qui reçoit les composantes Rouge, Verte et Bleue du signal vidéo en sortie de l'étage de gain 4 et qui les traite de manière à constituer une table des pixels défectueux avec les amplitudes correspondantes donnant les valeurs de correction à appliquer au signal vidéo, conformément au procédé de la présente invention qui sera décrit ultérieurement. Comme représenté sur la figure 1, le circuit d'acquisition 6 est connecté au circuit de restitution 7. La sortie du circuit de restitution 7 est envoyée sur le sommateur 3 de manière à appliquer un signal de correction correspondant à la corection au noir sur le signal vidéo, plus particulièrement sur la composante Rouge, Verte ou Bleue concernée du signal vidéo issu de l'échantillonneur 2. D'autre part, le circuit de restitution envoie une information sur l'étage de gain 4 qui correspond à la correction au blanc.

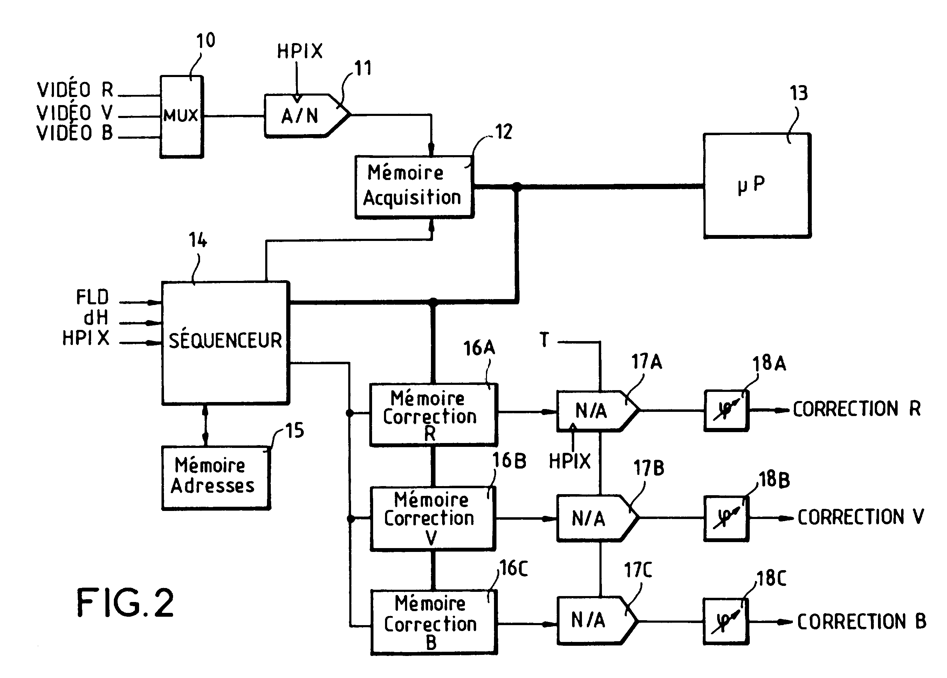

On décrira maintenant, avec référence à la figure 2, un mode de réalisation particulier du dispositif de correction des défauts d'uniformité des pixels d'un senseur à l'état solide conforme à la présente invention. Le système de la figure 2 est constitué des circuits d'acquisition 6 et de restitution 7. Comme représenté sur la figure 2, ce dispositif comporte essentiellement un multiplexeur 10 qui reçoit en entrée les composantes vidéo Rouge, Verte, Bleue et qui les envoie successivement sur un convertisseur analogique-numérique 11. Le convertisseur analogique-numérique 11 fonctionne à la fréquence d'horloge-pixel HPIX. Il envoie les composantes Rouge, Verte, Bleue successivement sur une mémoire d'acquisition 12. La mémoire d'acquisition 12 a une capacité correspondant à une ligne du senseur. Selon le procédé, chaque ligne vidéo est traitée successivement. Comme représenté sur la figure 2, la mémoire d'acquisition 12 est connectée à un microprocesseur 13 dont le rôle principal est de réaliser un certain nombre d'accumulations de la même ligne-vidéo ainsi que les comparaisons à un seuil. Le séquenceur 14 est commandé principalement par le signal d'horloge-pixel HIPX, le signal de déclenchement horizontal DH permettant d'obtenir le signal de synchronisation horizontale et le signal de déclenchement vertical FLD permettant d'obtenir le signal de synchronisation verticale. Comme représenté sur la figure 2, le séquenceur 14 est connecté à une mémoire-adresses 15. Cette mémoire-adresses a une capacité correspondant au nombre de pixels du senseur. En fait, chaque bit de la mémoire-adresses correspond à un pixel du senseur et est positionné à "0" ou à "1" suivant que le pixel est défectueux ou non, comme cela sera expliqué ci-après.

Cette mémoire-adresses 15 constitue donc une partie de la table des pixels défectueux stockée une fois pour toutes lors de l'acquisition. D'autre part, le dispositif de correction comporte trois mémoires de correction 16A, 16B, 16C destinées à stocker la valeur de correction d'un pixel défectueux. Les mémoires 16A, 16B, 16C sont reliées au séquenceur dont le rôle est de fournir une adresse dans ces mémoires et elles stockent les valeurs de correction issues du microprocesseur 13, respectivement pour les composantes Rouges dans la mémoire 16A, les composantes Vertes dans la mémoire 16B, et les composantes Bleues dans la mémoire 16C. Les circuits décrits ci-dessus font essentiellement partie du circuit d'acquisition 6.

D'autre part, chaque mémoire de correction 16A, 16B, 16C est connectée en sortie à un convertisseur numérique-analogique 17A, 17B, 17C . Chaque convertisseur numérique-analogique 17A, 17B, 17C fonctionne à une fréquence d'horloge qui est la fréquence d'horloge-pixel. D'autre part, conformément à la présente invention, pour prendre en compte les variations de température qui ont une importance non négligeable sur le courant d'obscurité, la tension de référence des convertisseurs numériques-analogiques 17A, 17B, 17C est fonction de la température T. En sortie de chaque convertisseur 17A, 17B, 17C, on a prévu un circuit de remise en phase 18A, 18B, 18C. On obtient donc en sortie des circuits 18A, 18B, 18C respectivement les valeurs de correction Rouge, Verte ou Bleue à appliquer sur le signal vidéo au niveau du circuit sommateur 3 de la figure 1. Dans ce cas, on applique en général un signal de correction constitué par une impulsion carrée dont la durée est fonction de la fréquence d'échantillonnage, à savoir de la fréquence d'horloge-pixel. De plus, le signal corrigé est filtré en tête du traitement vidéo, ce qui dispense d'une mise en forme précise. Il est simplement nécessaire de réaliser une mise en phase fine des signaux pour compenser correctement les défauts, cette mise en phase étant réalisée par les circuits 18A, 18B, 18C.

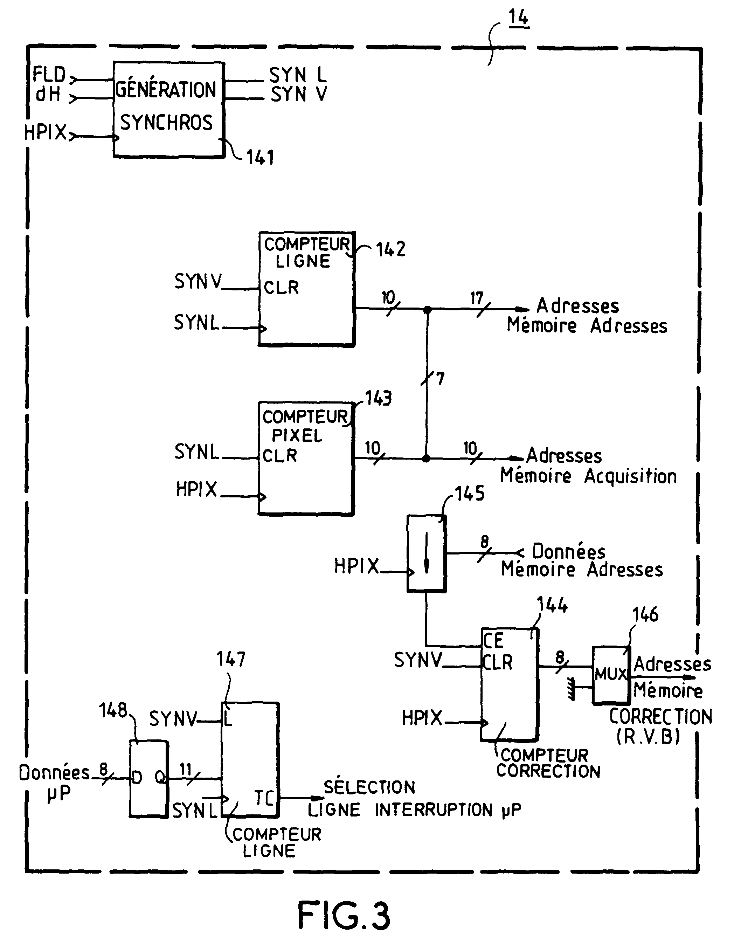

On décrira maintenant, succintement, un mode de réalisation du séquenceur 14 qui est constitué plus particulièrement par un réseau programmable. Comme représenté sur la figure 3, le séquenceur 14 est constitué essentiellement d'un circuit 141 de génération des signaux de synchronisation qui permet à partir notamment des signaux FLD et DH d'obtenir le signal de synchronisation-ligne SYNL et le signal de synchronisation verticale SYNV. Ces signaux sont utilisés dans les autres circuits du séquenceur pour détecter un début de ligne ou un début de trame.

Comme représenté sur la figure 3, le séquenceur comporte aussi deux compteurs 142, 143, à savoir un compteur-ligne 142 et un compteur-pixel 143. Le compteur-ligne est initialisé par le signal de synchronisation verticale SYNV et il décompte chaque ligne en fonction du signal de synchronisation-ligne SYNL. Il donne en sortie une information sur 10 bits, par exemple, qui associée à une partie de l'information issue du compteur pixel permet d'obtenir une adresse dans la mémoire-adresses 15. Le compteur pixel est initialisé par le signal de synchronisation-ligne SYNL et il décompte à la fréquence d'horloge-pixel HPIX, En sortie, il permet d'obtenir une adresse dans la mémoire d'acquisition. D'autre part, le séquenceur 14 permet d'adresser les mémoires de correction Rouge, Verte, Bleue. L'adresse dans une mémoire de correction est obtenue en utilisant un compteur de correction 144, qui est initialisé par le signal de synchronisation verticale SYNV et qui compte à la fréquence d'horloge pixel HPIX. Le compteur de correction reçoit une information d'incrémentation CE à partir d'une donnée mémoire-adresses issue du circuit 145 . Le circuit 145 est un circuit de sérialisation qui permet d'obtenir les données de la mémoire-adresses bits après bits et qui fonctionne à la fréquence d'horloge-pixel HPIX. La sortie du compteur 144 est envoyée en entrée d'un multiplexeur 146 dont l'autre entrée est mise à la masse et qui donne en sortie une adresse dans l'une des mémoires de correction Rouge, Verte, Bleue. En fait, cette adresse est incrémentée à chaque fois que l'on recontre par exemple un "1" dans la mémoire-adresses 15 signifiant qu'il y a un pixel défectueux et que l'on doit stocker ou lire dans l'une des mémoires de correction 16A, 16B, 16C une valeur de correction donnée par la mémoire d'acquisition 12 et le micro-processeur 13. Si l'on rencontre un "O" le multiplexeur 146 force l'adresse dans les mémoires de correction R, V, B à zéro. Dans cette adresse zéro est stockée une valeur de correction égale à zéro.

Le séquenceur 14 permet aussi de réaliser des interruptions du microprocesseur et une sélection ligne. Il est constitué par un compteur-lignes 147 qui reçoit sur son entrée le signal de synchronisation verticale SYNV et qui compte à la fréquence de synchronisation-ligne SYNL. Il reçoit aussi la sortie Q d'une bascule D 148 dont l'entrée est connectée à la sortie-données du microprocesseur qui fournit un numéro de ligne.

On décrira maintenant, de manière plus détaillée, le procédé de correction des défauts d'uniformité des pixels d'un senseur à l'état solide pouvant être mis en oeuvre avec les circuits des figures 1, 2 et 3. Conformément à la présente invention, la correction nécessite la mise en mémoire des informations de position et d'amplitude des défauts au noir. Cette mise en mémoire, de manière à constituer au moins une table de correction des pixels défectueux, est réalisée grâce à la mémoire-adresses 15 et grâce aux mémoires de correction Rouge, Vert, Bleu 16A, 16B, 16C. Conformément à la présente invention, pour simplifier le séquencement, on affecte chaque bit de la mémoire-adresses 15 à un pixel de la matrice CCD. La mémoire 15 est lue séquentiellement à la fréquence pixel.

Lorsque le pixel courant a été établi défectueur, un "1" est lu dans la mémoire adresses dans la position correspondant à la position du pixel traité. Dans ce cas, l'adresse des trois mémoires de correction R.V.B. (16A, 16B, 16C) est incrémentée par le compteur 144 et les sorties de ces mémoires contiennent les valeurs de correction à appliquer à l'entrée du convertisseur numérique analogique 17A, 17B, 17C . Dans le cas contraire, le multiplexeur 146 force l'adresse "O" sur les mémoires de correction et une correction nulle est envoyée au convertisseur numérique/analogique 17A, 17B, 17C.

Avant d'expliquer comment on obtient les valeurs de correction, on rappellera tout d'abord le procédé de lecture classique d'un senseur à l'état solide tel qu'un senseur CCD utilisé dans une caméra de prise de vues. Cette lecture est réalisée de la façon suivante :

- pour la trame paire, on lit successivement d'abord la ligne 1 plus la ligne 2, puis ensuite la ligne 3 plus la ligne 4, et puis la ligne 5 plus la ligne 6 et ainsi de suite;
- pour la trame impaire, on se décale d'une ligne, et l'on lit successivement la ligne 2 plus la ligne 3, la ligne 4 plus la ligne 5, la ligne 6 plus la ligne 7, et ainsi de suite.

En conséquence, un défaut sur un pixel est vu successivement dans les deux trames avec la même amplitude. Cette caractéristique sera utilisée dans le programme d'acquisition des valeurs de correction pour être sûr de réaliser une correction sur un pixel défectueux. D'autre part, la lecture des composantes Vertes est réalisée avec un décalage d'un demi-pas d'horloge par rapport à la lecture des composantes Rouge et Bleue, ce qui nécessite la mise en phase réalisée lors de la restitution.

D'autre part, la gamme d'amplitude des défauts d'uniformité des pixels, lorsqu'on examine le courant d'obscurité, est comprise entre 1 et 10% du niveau du signal vidéo maximum, ceci entraîne des valeurs de correction avant traitement du signal comprises entre 1,7 et 17 mV. De plus, le rapport signal à bruit dans le cas d'un signal vidéo est de 58 dB dans les voies Verte et Rouge et de 48dB dans la voie Bleue. Il existe donc des risques de prendre le bruit pour un défaut des pixels. Pour remédier à cet inconvénient on propose, conformément à la présente invention, d'obtenir la valeur de correction après avoir fait une accumulation de la même ligne du signal vidéo avant de réaliser la comparaison au seuil. Pour déterminer le nombre optimal d'accumulation nécessaire, on utilisera une modélisation gaussienne du bruit. Dans ce cas, un seuil d'extraction égal à 5 $N_O$ assure un taux de fausse alarme inférieur à $10^{-6}$. Ceci permet de déterminer le nombre d'accumulation minimum qui doit être tel que :

$$5\ N_O/(k)^{1/2} < p_{min}$$

où $P_{min}$ est le défaut minimum à corriger. On obtient donc une valeur de k > 7 sachant que $N_O = 0,9$ mVrms (pour le Vert et le Rouge) et $N_O = 2,8$ mVrms pour le Bleu.

Conformément à la présente invention, la valeur de correction à appliquer sur un pixel défectueux est obtenue en comparant l'amplitude du courant d'obscurité, à savoir successivement les composantes Rouge, Verte et Bleu du signal vidéo lorsque l'iris est fermé, à un seuil. Toutefois, pour éviter les perturbations provoquées par les tâches au noir, on ne compare pas directement l'amplitude d'un pixel au seuil, mais on réalise cette comparaison au seuil en utilisant les valeurs des pixels voisins. Ainsi, la valeur de correction et la position du pixel défectueux sont obtenues en réalisant, à l'aide du microprocesseur 13, l'opération :

$$(1)\qquad 2p(n) - p(n+1) - p(n-1) > seuil$$

et même de préférence

$$(2)\qquad 2p(n) - p(n+2) - p(-2) > seuil.$$

Selon une autre caractéristique de l'invention, il est nécessaire de déterminer la position exacte du pixel auquel l'on doit appliquer la correction. En effet, par suite du décalage d'1/2 pixel entre le vert d'une part, le rouge et le bleu d'autre part, la position du pixel défectueux est connue avec une incertitude de plus ou moin un pixel avant ou après. Il existe plusieurs méthodes pour déterminer la position exacte du pixel. Conformément à la présente invention, on réalise plusieurs cycles acquisition-restitution et l'on vérifie qu'aucune valeur de correction ne permet d'éliminer le défaut.

Les éléments ci-dessus étant pris en compte, on décrira maintenant de manière plus spécifique le programme d'acquisition permettant de mettre dans les mémoires de correction 16A, 16B, 16C les valeurs de correction des pixels défectueux. La scrutation de l'image au noir du senseur CCD se fait ligne à ligne dans la trame paire. Conformément à la présente invention, on accumule au moins 7 fois la ligne 1 plus la ligne 2 dans la trame paire. Lorsque l'accumulation est réalisée, on réalise à l'aide du microprocesseur 13 et conformément à l'opération 2 mentionnée ci-dessus, la comparaison à un seuil de la ligne accumulée dans la trame paire. Si l'on détecte dans cette ligne un pixel défectueux, à savoir si l'on détecte une valeur supérieure au seuil avant de stocker la position du pixel dans la mémoire-adresses 15 et la valeur de correction dans l'une des mémoires de correction 16A, 16B, 16C, on effectue une vérification à l'aide de la trame impaire. En effet, conformément au procédé de lecture d'un senseur CCD, si un pixel défectueux se trouve dans la trame paire, on doit le retrouver dans la trame impaire. Pour cela on réalise l'accumulation de la ligne de même numéro de la trame impaire. Lorsque cette accumulation est terminée, on réalise pour la ligne de même numéro de la trame impaire la comparaison au seuil. Si le pixel défectueux est confirmé dans la trame impaire, on affine la valeur de correction et la position en réalisant une mise en phase comme décrit ci-dessus et l'on stocke dans la mémoire-adresses la position du pixel et dans la mémoire correction concernée la valeur de la correction. Si la présence d'un pixel défectueux n'est pas confirmée, on réalise l'accumulation de la ligne suivante dans la trame impaire, de la manière décrite ci-dessus, puis on compare la valeur obtenue au seuil. Si, dans ce cas, l'alarme est confirmée, on affine la position et la valeur de correction comme déjà mentionné ci-dessus et l'on stocke l'information nécessaire dans la mémoire-adresse et l'une des mémoires de correction. Ensuite, on incrémente le numéro de ligne d'une unité et on recommence l'accumulation pour le nouveau numéro de ligne dans la trame paire, cette opération est réalisée jusqu'à ce que l'on ait balayé l'ensemble de la trame.

En fait, le programme d'acquisition est réalisé une fois pour toute de manière à stocker dans la mémoire-adresses 15 et dans les mémoires de correction 16A, 16B, 16C des valeurs nécessaires qui seront utilisées ensuite à chaque prise de vue dans la phase de restitution.

Selon une variante de la présente invention, la phase d'acquisition peut être refaite périodiquement par l'utilisateur, si nécessaire.

On réalise un procédé identique pour déterminer les tables de position et de valeurs de correction des pixels défectueux dans le cas d'une correction des défauts dans les blancs.

## Revendications

1. Procédé de correction des défauts d'uniformité des pixels d'un senseur à l'état solide (1) tel qu'un dispositif à transfert de charges, ledit procédé comprenant les étapes suivantes :

- dans une première phase, dite phase d'acquisition (6), on balaye ligne par ligne le senseur, on détermine, pour chaque pixel d'une ligne, s'il y a lieu d'apporter une correction au signal vidéo par des opérations de calcul et de comparaison à un seuil du signal vidéo de manière à disposer d'une table des pixels défectueux avec les valeurs de correction à appliquer,
- dans une deuxième phase, dite phase de restitution (7), on balaye ligne par ligne le senseur, on applique au signal vidéo, pour chaque pixel de même position de la table des pixels marqués défectueux, la valeur de correction stockée pour ledit pixel défectueux,

caractérisé en ce que, lors de la phase d'acquisition, on réalise une accumulation de la même ligne du signal sur k trames.

2. Procédé selon la revendication 1, caractérisé en ce que k est choisi supérieur à 7 afin de minimiser le taux de fausse alarme.

3. Procédé selon la revendication 1 ou 2, caractérisé en ce qu'on valide la position d'un pixel défectueux en comparant la même ligne dans une trame paire et dans une trame impaire, lorsque la lecture du senseur est faite par addition d'une ligne impaire et d'une ligne paire pour une trame paire et par addition d'une ligne paire et d'une ligne impaire pour une trame impaire ou vice et versa.

4. Procédé selon l'une quelconque des revendications 1 à 3, caractérisé en ce que l'on affine la position d'un pixel défectueux en réalisant une correction de phase consistant à répéter plusieurs cycles phase d'acquisition / phase de restitution.

5. Procédé selon l'une quelconque des revendications 1 à 4, caractérisé en ce que, pour réaliser la comparaison, le signal vidéo est numérisé et échantillonné à la fréquence d'horloge-pixel et en ce que la comparaison est réalisée par la fonction :

$$2\,p(n) - p(n + 2) - p(n - 2) > seuil$$

où $p(n)$ correspond au signal vidéo numérisé du pixel de rang n sur une ligne,
$p(n + 2)$ correspond au signal vidéo numérisé du pixel de rang $(n + 2)$ sur ladite ligne,
$p(n - 2)$ correspond au signal vidéo numérisé du pixel de rang $(n - 2)$ sur ladite ligne.

6. Procédé selon l'une quelconque des revendications 1 à 4, caractérisé en ce que pour réaliser la comparaison, le signal vidéo est numérisé et échantillonné à la fréquence d'horloge-pixel et en ce que la comparaison est réalisée par la fonction :

$$2 p(n) - p(n + 1) - p(n - 1) > seuil$$

où p(n) correspond au signal vidéo numérisé du pixel de rang n sur une ligne,
p(n + 1) correspond au signal vidéo numérisé du pixel de rang (n + 1) sur ladite ligne,
p(n - 1) correspond au signal vidéo numérisé du pixel de rang (n - 1) sur ladite ligne.

7. Procédé selon l'une quelconque des revendications 1 à 6, caractérisé en ce que la table des pixels défectueux avec les amplitudes correspondantes donnant les valeurs de correction à appliquer est déterminée une fois pour toutes.

8. Procédé selon l'une quelconque des revendications 1 à 7, caractérisé en ce que la phase de restitution est réalisée à chaque balayage du senseur.

9. Procédé selon l'une quelconque des revendications 1 à 8, caractérisé en ce que la valeur de correction à appliquer sur le signal vidéo est convertie de numérique en analogique avant d'être appliquée sur le signal vidéo.

10. Procédé selon l'une quelconque des revendications 1 à 9, caractérisé en ce que l'amplitude de la valeur de correction est ajustée en fonction de la température.

11. Procédé selon l'une quelconque des revendications 1 à 10, caractérisé en ce que le signal à corriger est constitué par les trois composantes R, V et B du signal vidéo.

12. Procédé selon l'une quelconque des revendications 1 à 11, caractérisé en ce que l'on effectue les phases d'acquisition, successivement sur chaque composante, les valeurs de correction étant stockées dans des tables différentes.

13. Procédé selon l'une quelconque des revendications précédentes, caractérisé en ce que la correction est effectuée dans les noirs par soustraction d'"offset".

14. Procédé selon l'une quelconque des revendications 1 à 12, caractérisé en ce que la correction est effectuée dans les blancs par multiplication du signal vidéo.

15. Dispositif pour la mise ne oeuvre du procédé selon l'une quelconque des revendications 1 à 14, caractérisé en ce qu'il comprend un convertisseur numérique-analogique (11) dont la sortie est connectée à une mémoire d'acquisition (12) permettant de stocker le signal vidéo numérisé, la mémoire d'acquisition ayant une capacité correspondant à au moins une ligne du senseur, une mémoire-adresses (15) stockant la position des pixels défectueux et ayant une capacité correspondant au moins au nombre de pixels du senseur, au moins une mémoire de correction (16A, 16B, 16C) stockant l'amplitude des valeurs de correction, un microprocesseur (13) effectuant l'accumulation et la comparaison au seuil et pilotant un séquenceur (14) adressant les différentes mémoires et au moins un convertisseur numérique-analogique (17A, 17B, 17C) connecté en sortie de la mémoire de correction.

16. Dispositif selon la revendication 15, caractérisé en ce que chaque bit de la mémoire-adresses correspond à un pixel du senseur et est positionné à "0" ou à "1" suivant que le pixel est défectueux ou non.

17. Dispositif selon l'une quelconque des revendications 15 ou 16, caractérisé en ce qu'il comporte trois mémoires de correction, chaque mémoire étant affectée respectivement aux composantes R, V et B.

18. Dispositif selon l'une quelconque des revendications 15, 16 ou 17, caractérisé en ce que le séquenceur est constitué par un réseau programmable.

19. Dispositif selon l'une quelconque des revendications 15 à 18, caractérisé en ce que la tension de référence des convertisseurs numériques-analogiques est fonction de la température.

20. Caméra de prise de vue comprenant un échantillonneur, un étage de gain et un circuit de traitement du signal vidéo, caractérisé en ce qu'elle comprend un dispositif selon l'une quelconque des revendications 15 à 19 et en ce que ledit dispositif est placé après l'échantillonneur et l'étage de gain et avant le circuit de traitement du signal vidéo.

**Patentansprüche**

1. Verfahren zur Korrektur von Fehlern der Gleichmäßigkeit der Pixel eines Festkörpersensors (1) wie beispielsweise einer Ladungsübertragungsvorrichtung, mit folgenden Schritten:

   - in einer ersten Phase, der sogenannten Erfassungsphase (6), wird der Sensor zeilenweise abgetastet und für jeden Pixel einer Zeile durch Operationen der Berechnung und des Vergleichens mit einem Schwellwert des Videosignals zum Anordnen einer Tabelle von fehlerhaften Pixeln mit den anzuwendenden Korrekturwerten festgestellt ob eine Korrektur an dem Videosignal durchzuführen ist,

- in einer zweiten Phase, der sogenannten Wiederherstellungsphase (7), wird der Sensor zeilenweise abgetastet und für jeden Pixel mit derselben Position der Tabelle von als fehlerhaft markierten Pixeln der für den besagten fehlerhaften Pixel gespeicherte Korrekturwert an das Videosignal angelegt,

dadurch gekennzeichnet, daß während der Erfassungsphase eine Ansammlung derselben Zeile des Signals über k Teilbilder ausgeführt wird.

2. Verfahren nach Anspruch 1, dadurch gekennzeichnet, daß k größer als 7 gewählt wird, um die Rate blinder Alarme zu minimieren.

3. Verfahren nach Anspruch 1 oder 2, dadurch gekennzeichnet, daß die Position eines fehlerhaften Pixels durch Vergleichen derselben Zeile in einem geradzahligen Teilbild und in einem ungeradzahligen Teilbild validiert wird, wenn das Lesen des Sensors durch Addition einer ungeradzahligen Zeile und einer geradzahligen Zeile für ein geradzahliges Teilbild und durch Addition einer geradzahligen Zeile und einer ungeradzahligen Zeile für ein ungeradzahliges Teilbild oder umgekehrt durchgeführt wird.

4. Verfahren nach einem der Ansprüche 1 bis 3, dadurch gekennzeichnet, daß die Position eines fehlerhaften Pixels durch Ausführung einer Phasenkorrektur verfeinert wird, die aus der Wiederholung von mehreren Erfassungsphasenzyklen/Wiederherstellungsphasenzyklen besteht.

5. Verfahren nach einem der Ansprüche 1 bis 4, dadurch gekennzeichnet, daß zur Ausführung des Vergleichs das Videosignal digitalisiert und mit der Pixeltaktfrequenz abgetastet wird und daß der Vergleich durch folgende Funktion ausgeführt wird:

$$2\,p(n) - p(n + 2) - p(n - 2) > \text{Schwellwert}$$

wobei p(n) dem digitalisierten Videosignal des Pixels mit Rang n auf einer Zeile,
p(n + 2) dem digitalisierten Videosignal des Pixels mit Rang (n + 2) auf der besagten Zeile und,
p(n - 2) dem digitalisierten Videosignal des Pixels mit Rang (n - 2) auf der besagten Zeile entspricht.

6. Verfahren nach einem der Ansprüche 1 bis 4, dadurch gekennzeichnet, daß zur Ausführung des Vergleichs das Videosignal digitalisiert und mit der Pixeltaktfrequenz abgetastet wird und daß der Vergleich durch folgende Funktion ausgeführt wird:

$$2\,p(n) - p(n + 1) - p(n - 1) > \text{Schwellwert}$$

wobei p(n) dem digitalisierten Videosignal mit Rang n auf einer Zeile,
p(n + 1) dem digitalisierten Videosignal des Pixels mit Rang (n + 1) auf der besagten Zeile und,
p(n - 1) dem digitalisierten Videosignal des Pixels mit Rang (n - 1) auf der besagten Zeile entspricht.

7. Verfahren nach einem der Ansprüche 1 bis 6, dadurch gekennzeichnet, daß die Tabelle der fehlerhaften Pixel mit den entsprechenden Amplituden, die die anzulegenden Korrekturwerte ergeben, nur ein einziges Mal bestimmt wird.

8. Verfahren nach einem der Ansprüche 1 bis 7, dadurch gekennzeichnet, daß die Wiederherstellungsphase bei jedem Abtasten des Sensors ausgeführt wird.

9. Verfahren nach einem der Ansprüche 1 bis 8, dadurch gekennzeichnet, daß der an das Videosignal anzulegende Korrekturwert vor dem Anlegen an das Videosignal von digital zu analog gewandelt wird.

10. Verfahren nach einem der Ansprüche 1 bis 9, dadurch gekennzeichnet, daß die Amplitude des Korrekturwertes in Abhängigkeit von der Temperatur eingestellt wird.

11. Verfahren nach einem der Ansprüche 1 bis 10, dadurch gekennzeichnet, daß das zu korrigierende Signal aus den drei Komponenten R, G und B des Videosignals besteht.

12. Verfahren nach einem der Ansprüche 1 bis 11, dadurch gekennzeichnet, daß die Erfassungsphasen nacheinander an jeder Komponente durchgeführt werden, wobei die Korrekturwerte in unterschiedlichen Tabellen gespeichert werden.

13. Verfahren nach einem der vorhergehenden Ansprüche, dadurch gekennzeichnet, daß die Korrektur durch Subtraktion des Offsets in den Schwarzwerten bewirkt wird.

14. Verfahren nach einem der Ansprüche 1 bis 12, dadurch gekennzeichnet, daß die Korrektur durch Multiplikation des Videosignals in den Weißwerten bewirkt wird.

**15.** Vorrichtung zur Ausführung des Verfahrens nach einem der Ansprüche 1 bis 14, dadurch gekennzeichnet, daß sie einen Analog-Digital-Wandler (11), dessen Ausgang mit einem Erfassungsspeicher (12) verbunden ist, wodurch das digitalisierte Videosignal gespeichert werden kann, wobei der Erfassungsspeicher eine mindestens einer Zeile des Sensors entsprechende Kapazität aufweist, einen Adreßspeicher (15), der die Position der fehlerhaften Pixel speichert und eine mindestens der Pixelzahl des Sensors entsprechende Kapazität aufweist, mindestens einen Korrekturspeicher (16A, 16B, 16C), der die Amplitude der Korrekturwerte speichert, einen Mikroprozessor (13), der die Ansammlung und den Schwellwertvergleich ausführt und eine Folgesteuerung (14) steuert, die die verschiedenen Speicher ansteuert, und mindestens einen mit dem Ausgang des Korrekturspeichers verbundenen Digital-Analog-Wandler (17A, 17B, 17C) umfaßt.

**16.** Vorrichtung nach Anspruch 15, dadurch gekennzeichnet, daß jedes Bit des Adreßspeichers einem Pixel des Sensors entspricht und, je nachdem, ob der Pixel fehlerhaft ist oder nicht, auf "0" oder auf "1" gesetzt wird.

**17.** Vorrichtung nach Anspruch 15 oder 16, dadurch gekennzeichnet, daß sie drei Korrekturspeicher umfaßt, wobei die Speicher den Komponenten R, G bzw. B zugeordnet sind.

**18.** Vorrichtung nach einem der Ansprüche 15, 16 oder 17, dadurch gekennzeichnet, daß die Folgesteuerung aus einem programmierbaren Netzwerk besteht.

**19.** Vorrichtung nach einem der Ansprüche 15 bis 18, dadurch gekennzeichnet, daß die Bezugsspannung der Digital-Analog-Wandler eine Funktion der Temperatur ist.

**20.** Bildaufnahmekamera mit einem Abtaster, einer Verstärkungsstufe und einer Videosignalbearbeitungsschaltung, dadurch gekennzeichnet, daß sie eine Vorrichtung nach einem der Ansprüche 15 bis 19 umfaßt und daß die besagte Vorrichtung hinter dem Abtaster und der Verstärkungsstufe und vor der Videosignalbearbeitungsschaltung geschaltet ist.

**Claims**

**1.** Process for correcting uniformity defects of the pixels of a solid state sensor (1) such as a charge transfer device, the said process comprising the following stages:

- in a first phase called the acquisition phase (6), the sensor is swept line by line, for each pixel of a line it is determined whether to apply a correction to the video signal by operations of calculating and comparing with the threshold on the video signal in such a manner as to arrange a table of the defective pixels with the correction values to be applied,

- in a second phase called the restitution phase (7), the sensor is swept line by line, and the correction value stored for the said defective pixel is applied for each pixel of the same position in the table of pixels which are marked defective to the video signal,

characterized in that during the acquisition phase an accumulation of the same line of the signal over k fields is effected.

**2.** Process according to Claim 1, characterized in that k is chosen to be higher than 7 in order to minimize the rate of false alarms.

**3.** Process according to Claim 1 or 2, characterized in that the position of a defective pixel is validated by comparing the same line in an even field and in an odd field, when the reading of the sensor is done by adding an odd line and an even line for an even field and for adding an even line and an odd line for an odd field or vice versa.

**4.** Process according to any of Claims 1 to 3, characterized in that the position of a defective pixel is made more precise by implementing a phase correction consisting of the repetition of several acquisition phase/restitution phase cycles.

**5.** Process according to any of Claims 1 to 4, characterized in that for the comparison, the video signal is digitized and sampled at the pixel clock frequency and in that the comparison is carried out by the following function:

$$2\,p(n) - p(n+2) - p(n-2) > threshold$$

where $p(n)$ corresponds to the digitized video signal of the pixel of position n on one line, $p(n+2)$ corresponds to the digitized video signal of the pixel of position $(n+2)$ in the said line, $p(n-2)$ corresponds to the digitized video signal of the pixel of position $(n-2)$ in the said line.

**6.** Process according to any of Claims 1 to 4, characterized in that for the comparison, the video signal is digitized and sampled at the pixel clock frequency and in that the comparison is carried out by the following function:

$$2\,p(n) - p(n + 1) - p(n - 1) > threshold$$

where p(n) corresponds to the digitized video signal of the pixel of position n on one line,
p(n + 1) corresponds to the digitized video signal of the pixel of position (n + 1) on the said line,
p(n - 1) corresponds to the digitized video signal of the pixel of position (n - 1) on the said line.

7. Process according to any of Claims 1 to 6, characterized in that the table of the defective pixels with the corresponding amplitudes giving the correction values to be applied is determined once and for all.

8. Process according to any of Claims 1 to 7, characterized in that the restitution phase is implemented with each sweeping of the sensor.

9. Process according to any of Claims 1 to 8, characterized in that the correction value to be applied to the video signal is converted from digital to analog before being applied to the video signal.

10. Process according to any of Claims 1 to 9, characterized in that the amplitude of the correction value is adjusted as a function of the temperature.

11. Process according to any of Claims 1 to 10, characterized in that the signal to be corrected consists of the three R, G and B components of the video signal.

12. Process according to any of Claims 1 to 11, characterized in that the acquisition phases are successively effected on each component, the correction values being stored in different tables.

13. Process according to any of the preceding claims, characterized in that the correction is effected in the blacks by subtracting offset.

14. Process according to any of Claims 1 to 12, characterized in that the correction is effected in the whites by multiplication of the video signal.

15. Device for carrying out the process according to any of Claims 1 to 14, characterized in that it comprises an analog/digital converter (11), the output of which is connected to an acquisition memory (12), which allows the digitized video signal to be stored, the acquisition memory having a capacity corresponding to at least one line of the sensor, an address memory (15) storing the position of the defective pixels and having a capacity corresponding at least to the number of pixels of the sensor, at least one correction memory (16A, 16B, 16C) storing the amplitude of the correction values, a microprocessor (13) effecting the accumulation and the threshold comparison and controlling a sequencer (14) addressing the different memories and at least one digital/analog converter (17A, 17B, 17C) connected to the output of the correction memory.

16. Device according to Claim 15, characterized in that each bit of the address memory corresponds to a pixel of the sensor and is set to "0" or to "1" according to whether the pixel is defective or not.

17. Device according to either of Claims 15 or 16, characterized in that it comprises three correction memories, each memory being associated with the R, G and B components respectively.

18. Device according to any of Claims 15, 16 or 17, characterized in that the sequencer consists of a programmable network.

19. Device according to any of Claims 15 to 18, characterized in that the reference voltage of the digital/analog converters is a function of the temperature.

20. Image-taking camera including a sampler, a gain stage and a video signal processing circuit, characterized in that it comprises a device according to any of Claims 15 to 19 and in that the said device is placed after the sampler and the gain stage and before the video signal processing circuit.

FIG.1

FIG.2

EP 0 561 674 B1

FIG.3